# EUROPEAN PATENT APPLICATION

(11) **EP 1 816 725 A1**
(43) Date of publication of application: **08.08.2007**
(21) Application number: 06101291.0
(22) Date of filing: 03.02.2006
(51) Int. Cl.: H02K 1/27, H02K 21/14, H02K 41/03, H01F 7/02

(54) **Permanent magnet assembly for electric machines and actuators, method for their design and electric machines and actuators**

(71) Applicant: University of Teheran, Teheran (IR)
(72) Inventor: Vaez-Zadeh, Sadegh, c/o University of Tehran, North Kagar Ave, P.O.BOX 14395/5, Tehran (IR); Isfahani, Asah Hassanpour, c/o University Tehran, North Kagar Ave, P.O.BOX 14395/5, Tehran (IR)
(74) Representative: Blasberg, Tilo

(57) **Abstract**

The invention relates to modular permanent magnet poles and to electric machines and actuators for use as electric drive systems incorporating them for shaping machine flux density distribution produced by permanent magnet poles to obtain smooth operation of electric machines and actuators. The proposed modular poles consist of three or more permanent magnet modules with specific dimensions and magnetizations. They provide almost any flux density distribution shape e.g. sinusoidal and trapezoidal shapes. The limited number of rectangular modules with the same heights and uniform magnetizations reduce the production cost of the machines and actuators.

## Description

### FIELD OF THE INVENTION

The present invention relates to permanent magnet machines and actuators for use as electric drive systems. It also relates to the shaping of permanent magnets for designing electric drive systems such as permanent magnet machines and actuators.

### BACKGROUND OF THE INVENTION

Rotary and linear permanent magnet (PM) electric machines are widely used in industrial applications. These machines include permanent magnet direct current (PMDC) machines, brushless direct current (BLDC) machines, permanent magnet synchronous (PMS) machines, interior permanent magnet (IPM) machines etc. In all these machines plus many actuators, PM poles provide the magnetic flux required for thrust or torque production. Therefore, the flux density distribution (FDD) of a PM pole has an essential effect on a PM machine performance through the development of thrust and torque. Also the FDD greatly influences pulsations of thrust and torque. A BLDC machine, for instance, benefits most from a trapezoidal FDD; while a PMS machine usually needs a sinusoidal FDD. Therefore, the shaping of FDD of a PM pole is critical in machine design. The shaping of a FDD can mainly be done via designing appropriate shape and dimensions of PM poles which in turn depends on many technical and economical factors.

This present application proposes a new PM pole with some of its varieties and applications. The proposed pole is called *modular permanent magnet pole* (MPMP) in this application. The MPMP is aimed towards the production of appropriate flux density distributions. This application also presents different PM machines and actuators incorporating the proposed MPMPs. The MPMPs develop high thrust and torque; while produce a substantially reduced thrust and torque pulsations. Thus provide desirable performance of machines and actuators. The use of full potential of PM materials in a MPMP also takes the economical factors into account. Here, some of the existing methods are reviewed before the MPMPs are described.

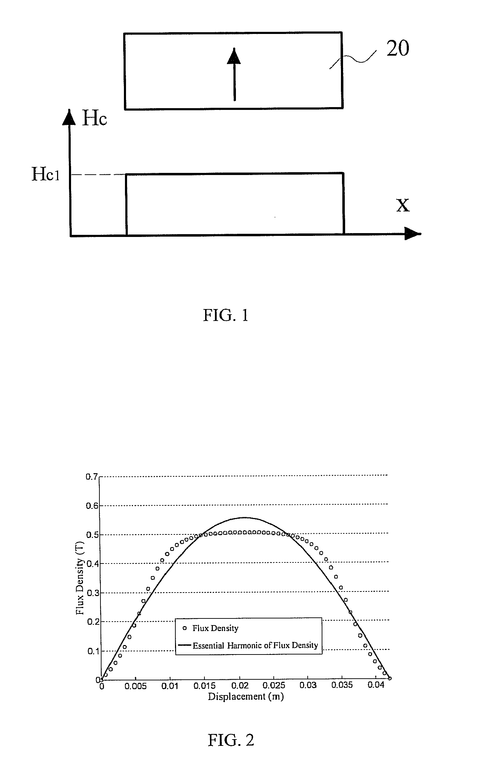

The simplest shape for a PM pole is a rectangular shown in FIG. 1 together with its magnetic field intensity. The manufacturing of such a pole is inexpensive. This pole, when it is used in a PM machine produces a FDD as presented in FIG. 2. Comparing this FDD with its essential harmonic (fundamental component), it is seen that the FDD is far from a sinusoidal shape as it is flat in the middle of the PM pole. It means that the FDD contains harmonics of higher order, in addition to its fundamental component. It is well known that these harmonics cause thrust or torque ripples in a PMS machine.

Different methods have been proposed to make such a FDD as close to a sinusoidal shape as possible. A simple method is the elimination of one or more harmonics by adjusting the PM pole width. This method however, may reduce the thrust density of PM pole and the machine thrust or torque since they are influenced by the pole width too. It means that the PM material of the PM pole has not been used wisely. This is not economic off course.

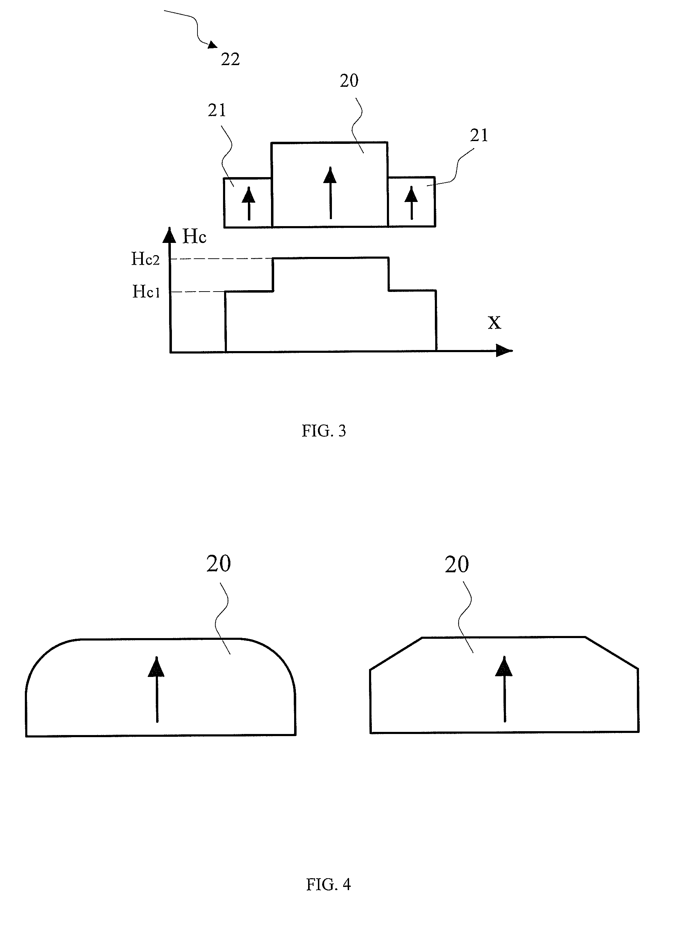

Another method is the use of a PM pole consisting of PM pieces of different heights as shown in FIG. 3 together with its magnetic field intensity. However, this PM pole when used in a PM machine causes non uniform machine air gap and results in audible noise and air resistance leading to deterioration of the machine performance and efficiency. The method also needs PM pieces with different dimensions which in turn increase the pole manufacturing complexity and cost.

The third method, which is more common, is the shaping of a PM pole corners to build a pole with trapezoidal shape or curvature corners as shown in FIG. 4. This method also increases the complexity and the cost of manufacturing. Moreover, the full potential of PM machine in developing thrust or torque is not utilized.

The fourth method is the non uniform magnetization of a PM pole such that the central part of the pole experiences a more intensive magnetic field with respect to the pole ends. This method overcomes the problem of a non uniform air gap. However, it suffers from two drawbacks. Firstly, it requires complex magnetization system and procedure which are more costly and time consuming. Secondly, the PM material is not fully utilized in the pole ends.

The fifth method is to use an array of PM peaces of each having a direction of magnetization 90 degrees apart from the direction of magnetization of an adjacent PM piece. This method needs many PM pieces with different sizes. This off course increases the complexity and cost of manufacturing of PM machines.

Methods as discussed above are disclosed e.g. by US 5,087,844 (Takedomi et al.), US 6,025,658 (Kamata), US 6,043,572 (Nagai et al.), US 6,597,079 B2(Miyashita et al.), US 6,741,002 B2 (Nishiyama et al.), US 6,815,858 B2 (Matsunobu et al.) and US 2005/0264122 (Domeki et al.). Related methods are also discussed in the following papers:
M. Marinescu and N. Marinescu, "New concept of permanent magnet excitation for electrical machines, Analytical and Numerical computation," IEEE Trans. Magn., vol. 28, pp. 1390-1393, March 1992.
K. Atallah, D. Howe, P. H. Mellor, "Design and analysis of multi-pole Halbach (self-shielding) cylinder brushless permanent magnet machines," Electrical Machines and Drives, 1997 Eight International Conference, pp. 376-380, September 1997.
C. A. Borghi, D. Casadei, M. Fabbri, and G. Serra, "Reduction of the torque ripple in permanent magnet actuators by a multi-objective minimization technique," IEEE Trans. Magn., vol. 34, pp. 2869-2872, Sept. 1998.
C. A. Borghi, D. Casadei, A. Cristofolini, M. Fabbri, and G. Serra, "Application of a multi-objective minimization technique for reducing the torque ripple in permanent magnet motors," IEEE Trans. Magn., vol. 35, pp. 4238-4246, Sept. 1999.
Carlo A. Borghi, Domenico Casadei, Andrea Cristofolini, Massimo Fabbri, and Giovanni Serra, "Minimizing Torque Ripple in Permanent Magnet Synchronous Motors With Polymer-Bonded Magnets," IEEE Trans. Magn., vol. 38, pp. 1371-1377, Mar. 2002.
Yong Li, Jibin Zou, Yongping Lu, "Optimum Design of Magnet Shape in Permanent-Magnet Synchronous Motors," IEEE Trans. on Magn., vol. 39, pp. 3523-35226 Nov. 2003.
Mi-Yong Kim, Yong-Chul Kim, and Gyu-Tak Kim, "Design of Slotless-Type PMLSM for High Power Density Using Divided PM," IEEE Trans. on Magn., vol. 40, pp. 746-749, Mar. 2004.
Z. P. Xia, Z. Q. Zhu, D. Howe, "Analytical magnetic field analysis of Halbach magnetized permanent-magnet machines, "IEEE Trans. on Magn., vol. 40, pp. 1864-1872, July 2004.

### SUMMARY OF THE INVENTION

It is an object of the present invention to provide permanent magnet assemblies, hereinafter called modular permanent magnet poles (MPMPs), enabling a more suitable shaping of the machine flux density distribution (FDD) produced by the permanent magnet (PM) poles. It is another object of the present invention to provide electric machines and actuators incorporating such MPMPs. It is another object of the present invention to provide a method for designing permanent magnet assemblies or MPMPs having a more suitable machine flux density distribution.

The above and other objects are achieved by a permanent magnet assembly according to claim 1, by an electric machine or actuator for use as an electric drive system according to claim 6 and by a method according to claim 13. Further advantageous embodiments are the subject-matter of further dependent claims.

The permanent magnet assemblies or MPMPs according to the present invention comprise a plurality of permanent magnets, each of cubic or cuboidal shape, wherein the permanent magnets each have the same height and are disposed contiguous with each other along a given straight or curved line such that said permanent magnet assembly of MPMP has at least one smooth surface which is spanned by axes including said given line, wherein the number of permanent magnets is given by 2n +1 with n being an integer larger than or equal to one and wherein said permanent magnets are shaped and configured such that a magnetic field distribution generated by said permanent magnet assembly is mirror symmetric about a mirror plane which is perpendicular to said given line.

The given line (hereinafter also called base line) determines the profile of the permanent magnet assemblies, which are most preferably straight, i.e. not curved, along a second line perpendicular to said given line and which are mirror-symmetric about a mirror plane, which is perpendicular to said given line (or base line) and intersects the second line such that the mirror plane is perpendicular to a plane spanned by said base line and said second line.

According to the present invention the permanent magnets forming the permanent magnet assembly are in direct contact with each other and are preferably connected with each other, e.g. by bonding or glueing. According to another embodiment, the permanent magnet assembly is provided as a unitary magnetic material having discrete portions each of cubic or cuboical shape and having a different magnetization. The surfaces of the assembly are either planar or can be smoothly curved, e.g. in the shape of a circle for application in rotary electric drive systems.

According to the present invention the permanent magnet assembly consists of an odd numbered plurality of permanent magnets. The overall magnetic field distribution is mirror symmetric about a mirror plane which is perpendicular to said given line. I.e. in case that the permanent magnet assembly has a planar surface, the line (or base line) is straight and the mirror plane is perpendicular to the planar surface. In case that the permanent magnet assembly has a curved surface, the line (or base line) is curved and the mirror plane is perpendicular to a tangent onto the curved line at the center of the assembly, i.e. extends radially outward in case of an assembly having a circular outer circumferential surface.

In other words, the permanent magnet assembly or MPMP according to the present invention consists of three or more PM pieces (modules), with the same height and different or equal widths, attached together. As so, a MPMP has the same height as the height of a permanent magnet piece, but a width equal to the sum of widths of all PM pieces forming the pole. The magnetizations of the magnetic materials, used in the PM pieces, are also different. By choosing appropriate widths for PM pieces, it is possible to shape the FDD of a MPMP to a desirable shape and provide a smooth machine operation. This shape for a MPMP used in permanent magnet synchronous (PMS) machines is usually a sinusoidal shape. For a brushless DC (BLDC) machine, the desired FDD is usually of trapezoidal shape. Having the desired FDD, the height of poles and the magnetization of PM materials, which are decided according to the motor performance requirement and the available permanent magnets, the widths of PM pieces are obtained.

The present application also relates to any rotary and linear electric machine or actuator incorporating such MPMPs, for use e.g. as electric drive systems. These are included but not limited to PMS machines, interior permanent magnet (IPM) machines, BLDC machines and permanent magnet direct current (PMDC) machines; where a machine is a motor or a generator. These machines contain low ripples in their thrust or torque and operate smoothly.

### BRIEF DESCRIPTION OF THE DRAWINGS

Hereinafter the present invention will be described by way of example with reference to the accompanying drawings, from which further features, advantages and problems to be solved will become apparent to a person skilled in the art, wherein:
- **FIG. 1**: shows a conventional rectangular shape permanent magnet pole and a graph of its magnetic field intensity;
- **FIG. 2**: shows a graph of the flux density distribution of the conventional permanent magnet pole shown in FIG 1, together with its fundamental component (essential harmonic), when the pole is used in a permanent magnet machine;
- **FIG. 3**: shows a PM pole consisting of PM pieces of different heights as shown together with its magnetic field intensity;
- **FIG. 4**: shows PM poles with trapezoidal shape or curvature corners requiring complex manufacturing processes;
- **FIG. 5**: shows a view of the modular permanent magnet pole according to the present invention consisting of three PM modules with the same height attached together to act as a single pole;
- **FIG. 6**: shows a 3-D view of the modular permanent magnet pole according to the present invention;
- **FIG. 7**: shows a machine secondary of a linear PM motor according to the present invention consisting of a pair of modular permanent magnet poles mounted on back iron of the secondary;
- **FIG.8**: shows a flux density distribution of the modular permanent magnet pole according to the present invention and the conventional PM poles, together with their fundamental components, showing that the proposed pole produces a flux density distribution closer to a sinusoidal shape than the conventional PM poles;
- **FIG. 8a**: shows a flux density distribution of a modular permanent magnet pole according to the present invention together with its fundamental component;
- **FIG. 8b**: shows a flux density distribution of a conventional permanent magnet pole with weak magnetic field intensity together with its fundamental component;
- **FIG. 8c**: shows a flux density distribution of a conventional permanent magnet pole with strong magnetic field intensity together with its fundamental component;
- **FIG. 9**: shows a harmonic content of back electromagnetic thrust (EMF) of a PM machine with the PM poles according to the present invention and that of a machine with conventional poles showing that the former produces contains less harmonics;
- **FIG. 10**: schematically shows thrusts produced by two linear PMS motors, one with the modular PM poles according to the present invention and the other with conventional PM poles, showing less ripples in the thrust of the machine with the proposed pole despite its higher thrust;
- **FIG. 11**: shows a normalized thrust of the motors of FIG. 10, showing that the motor with conventional PM poles produces more than 50% higher thrust ripples than the motor with the PM poles according to the present invention;
- **FIG. 12**: shows the harmonic content of thrusts for the linear motor of FIG. 10 with conventional PM poles;
- **FIG. 13**: shows the harmonic content of thrusts for the linear motor of FIG. 10 with the modular permanent magnet poles according to the present invention;
- **FIG. 14**: shows a single sided surface mounted linear PMS motor including of a primary and a secondary and the air gap between them, wherein the secondary consists of the modular PM poles according to the present invention mounted on a back iron;
- **FIG. 15**: shows a similar machine with the one in FIG. 14 but with inset magnets where the modular poles are installed in the secondary back iron such that a uniform air gap is provided;
- **FIG. 16**: shows a double sided secondary for linear PM machines, incorporating the modular poles according to the present invention;
- **FIG. 17**: shows a double sided air-cored linear PMS machine with the secondary of FIG. 16;
- **FIG. 18**: shows a double sided air-cored linear PM machine according to the present invention with the modular poles for a positioning system;
- **FIG. 19**: shows a linear IPM motor according to the present invention with a secondary consisting of the modular poles installed in the iron core;
- **FIG. 20**: shows a rotary surfaced mounted PMS machine according to the present invention consisting of a stator, a rotor and an air gap, wherein the rotor consists of iron core and the modular poles mounted on the surface of the core;
- **FIG. 21**: shows a rotary inset PMS motor according to the present invention in which the modular poles are installed in the rotor core such that a uniform air gap is provided;
- **FIG. 22**: shows a rotary IPM machine with the modular poles according to the present invention buried inside the rotor core;
- **FIG. 23**: shows a radial flux concentrated PMS motor with the modular poles according to the present invention; and
- **FIG. 24**: shows a schematic flowchart of a method for calculating dimensions and magnetizations of permanent magnet modules according to the present invention.

### DETAILED DESCRIPTION OF PREFERRED EMBODIMENTS ACCORDING TO THE PRESENT INVENTION

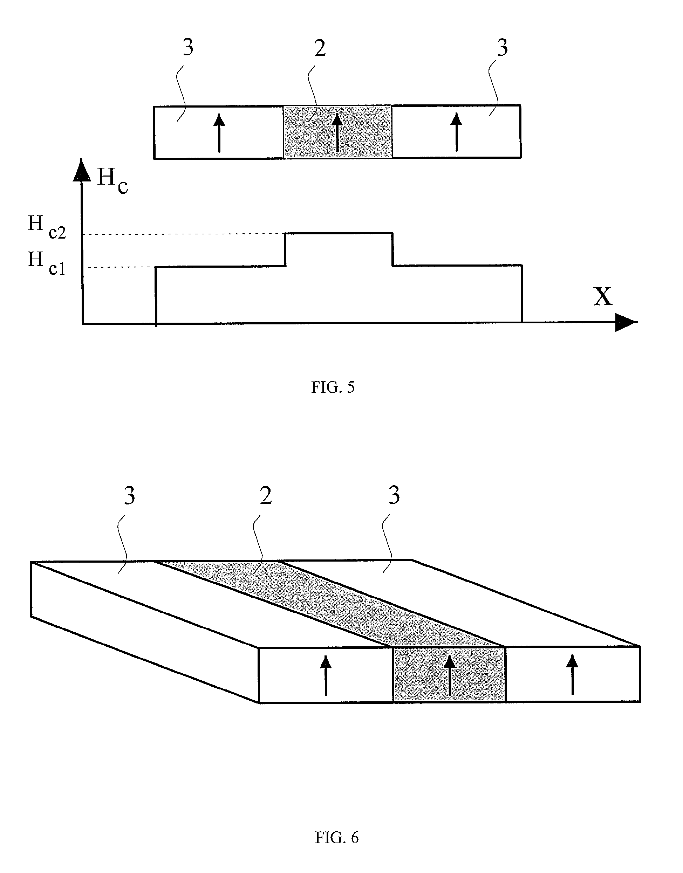

Referring to Fig. 5, a permanent magnet assembly or hereinafter modular permanent magnet pole (MPMP) according to the present invention is an array of three permanent magnets or hereinafter PM modules 2, 3, i.e. of three cuboidal or cubic modules of permanent magnet materials. Each of the PM modules 2, 3 has the same height and the same depth. The PM modules are attached together to form a block of permanent magnet of cuboidal shape or cubic shape. As shown in Fig. 5, the width of the two outside permanent magnet modules 3 are the same; while the width of the middle module 2 can be different. The modular permanent magnet pole thus has a height as the height of modules, and a depth as the depth of the modules, and a width as the sum of the widths of the modules. The permanent magnet assembly shown in Fig. 5 thus forms a PM pole which can be used in electric machines. The pole is made of two different permanent magnet materials. The outside permanent magnet modules are made of a lower quality permanent magnet material with a weaker magnetization; while the middle permanent magnet module is made of a higher quality permanent magnet material with a stronger magnetization.

As shown in Fig. 5, the permanent magnets 2, 3 are disposed contiguous with each other along a straight line x (also called base line) such that the assembly has a smooth, planar upper and lower surface spanned by the line x and a line perpendicular to line x and to the drawing plane. The lower part of Fig. 5 shows the magnetic field distribution generated by the assembly. In the upper part of Fig. 5 the arrows indicate the direction of polarization of the permanent magnets 2, 3. As shown, the magnetizations are all of the same polarity, i.e. point into the same direction. As the center permanent magnet 2 has a stronger magnetization and the magnetizations and widths of the two outer permanent magnets 3 are identical, the resulting magnetic field distribution is mirror symmetric about a plane intersecting the assembly in the center and lengthwise.

As will become apparent to a person skilled in the art, the base line of the three permanent magnet modules can also be curved or even undulated, which will result in a curved or even undulated upper and/or lower surface of the assembly. The line x determines the profile of the surface of the permanent magnet assembly consisting of the magnets 2 and 3. In a second direction, which is perpendicular to the line x and perpendicular to the plane of drawing of Fig. 5 the surface of the magnets 2, 3 is straight, i.e. not curved, so that a central mirror plane, which is in parallel with this second direction, is perpendicular to said line x at the center of the permanent magnet assembly.

FIG. 6 shows a 3-D view of the MPMP shown in Fig. 5.

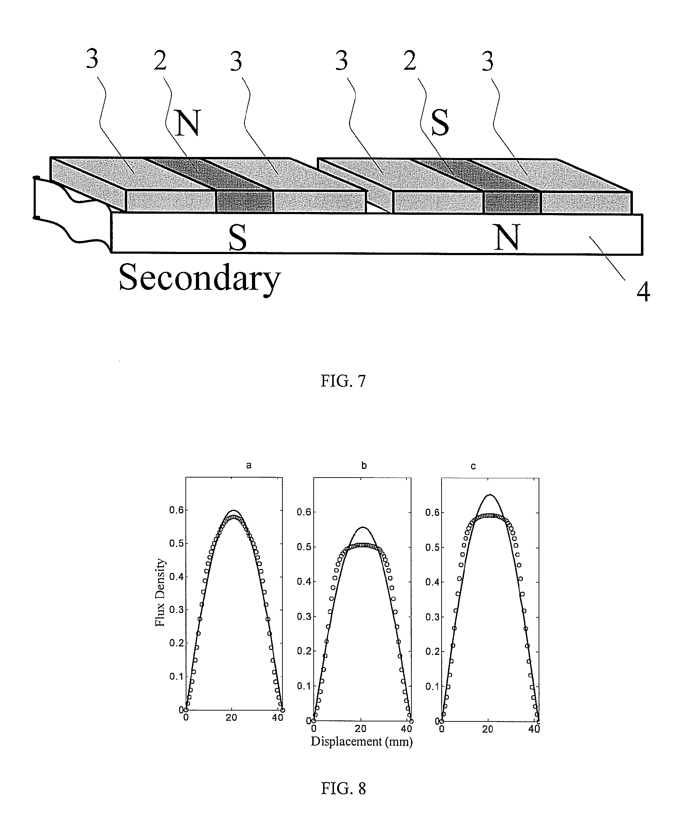

FIG. 7 shows the arrangement of a pair of MPMPs for application in a linear PM machine. As shown in Fig. 7, both MPMPs consist of a center permanent magnet 2 and two outside permanent magnets 3, wherein the left MPMP has a magnetization of opposite polarity as compared to the right MPMP. As shown in Fig. 7, the left MPMP forms a North-pole whereas the right MPMP forms a South-pole. Bothe MPMPs are mounted on the machine secondary back iron 4. A MPMP produces a FDD with a desirable shape and thus develops a smooth and low ripple thrust and torque in linear and rotary machines, actuators and the like.

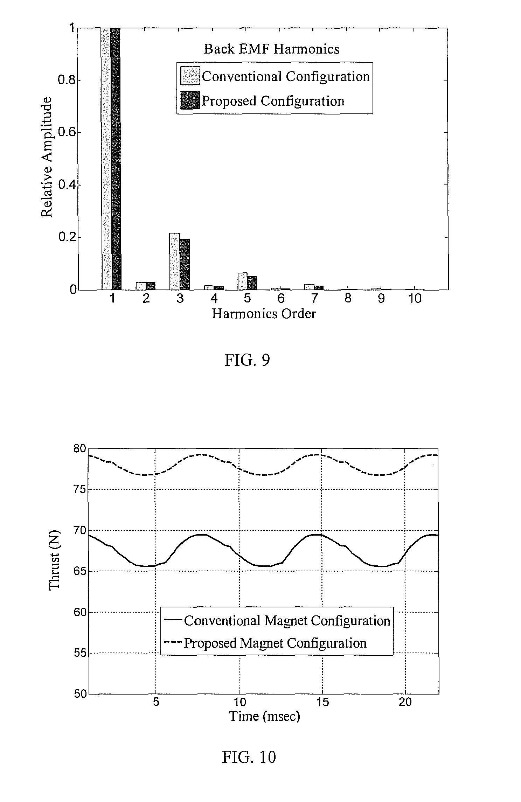

A flux density distribution (FDD) of a MPMP and the FDDs of two conventional PM poles are depicted in FIG. 8. FIG. 8a shows the FDD of the MPMP according to the present invention whereas FIGs. 8b and 8c show the FDDs of the conventional PM poles with weak and strong magnetic field intensities respectively. In FIGs. 8a-c the circles show the FDDs and the solid lines show the fundamental components of the FDDs. As shown the MPMP according to the present invention produces a FDD much closer to a sinusoidal shape than the FDDs of conventional PM poles. In fact the stronger field intensity of the middle PM module overcomes the flatness of FDD caused in conventional PM poles.

The use of the MPMP according to the present invention is also effective in reduction of harmonic content of back electromagnetic thrust (EMF) as shown in FIG. 9. This causes less motor current harmonics.

Less harmonics in FDD and currents lead to less ripples in machine thrust or torque. The thrust produced by two linear PMS motors, one with MPMPs according to the present invention and the other with conventional PM poles, are compared in FIG. 10. As shown in Fig. 10, the motor with MPMPs according to the present invention produces less thrust ripples despite the production of about 15% higher thrust.

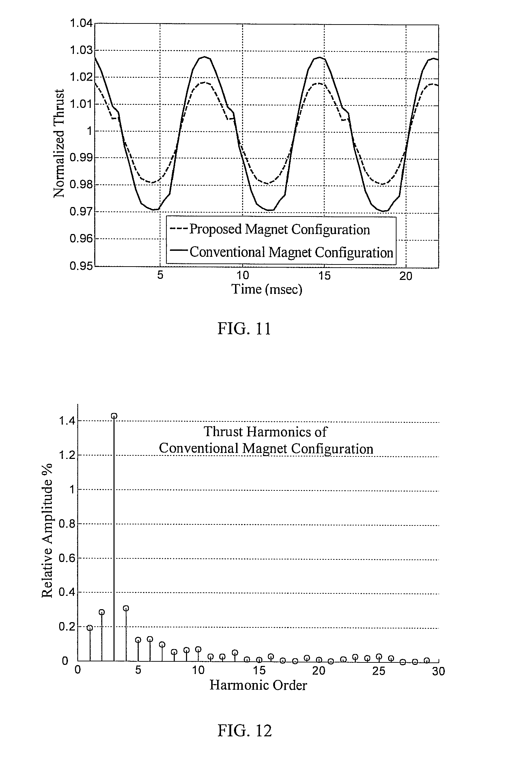

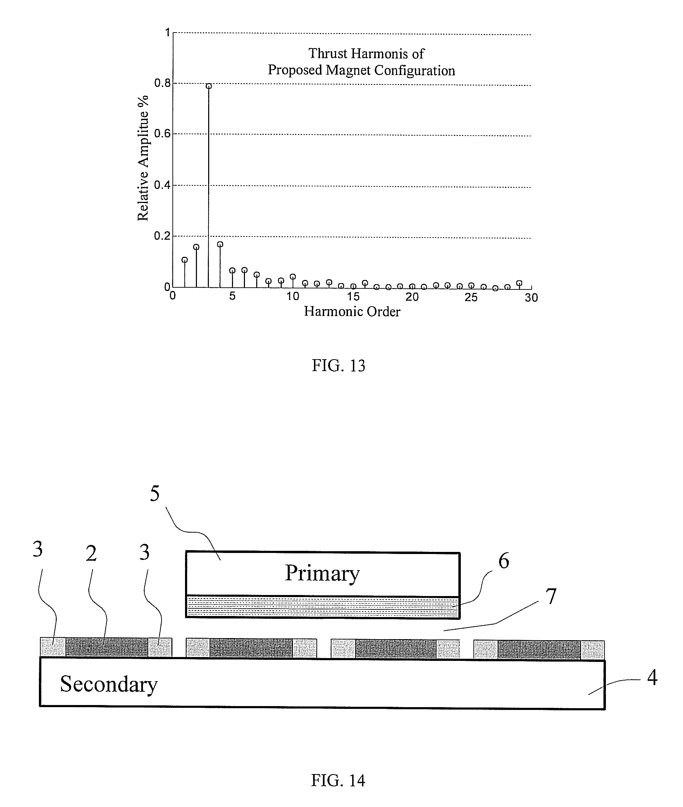

A closer comparison of thrust ripples of the two motors can be done by looking at the normalized thrust of the motors as presented in FIG. 11. As shown in Fig. 11, the motor with conventional PM poles produces more than 50% higher ripples than the motor with MPMPs according to the present invention. The harmonic content of thrusts for the two motors is shown in FIGs. 12 and 13. Again a substantial improvement in harmonic content of the motor with MPMPs according to the present invention is observed.

Similar to the above description, it is possible to build MPMPs with just three PM modules producing an almost trapezoidal shape FDD by adjusting the width of PM modules for application in BLDC machines.

An important feature of a three-module MPMP is the ease of its production since only two types of rectangular PM pieces with no cutting and corner shaping are required. Another feature is the utilization of full potential of PM materials resulting in cost reduction of pole production. In fact both high field intensity PM material used in the middle module and low field intensity PM material used in the outside modules are magnetized to their full potential. Also the modules needs uniform magnetization which is cost saving in comparison with a non uniform magnetization. A more cost saving factor is the use of lower quality PM material in the production of outside modules. The high quality PM material of the middle PM module is worth its cost too; since it contributes to the increase of thrust or torque as well as to FDD shaping and ripple reduction. Electric machines using the invented MPMPs can be built with uniform air gap, thus featuring reduced audible noise and air friction. As a result higher machine efficiency especially at high speed operation is achieved. Modular arrangement of PM poles according to the invention makes it possible to build MPMPs consisting of more than three modules. A minimum number of module types, in terms of dimensions and materials, are required to reduce the manufacturing cost of MPMPs. Flux density distribution of any shape can be produced by such MPMPs.

The MPMPs according to the present application can be applied for various types of PM machines and actuators. Several types of these machines are presented hereinafter as examples. The examples include both linear and rotary machines.

FIG. 14 shows a single sided surface mounted linear PMS motor consisting of a primary 5 and a secondary 4 and the air gap 7 between them. The primary includes an iron core 5 and a three phase winding 6. The secondary consists of the MPMPs according to the present invention, each consisting of three permanent magnets 2, 3, which are mounted on a back iron 4. Each MPMP is magnetized in a direction opposite to the direction of magnetization of an adjacent MPMP. A non uniform air gap 7 is provided.

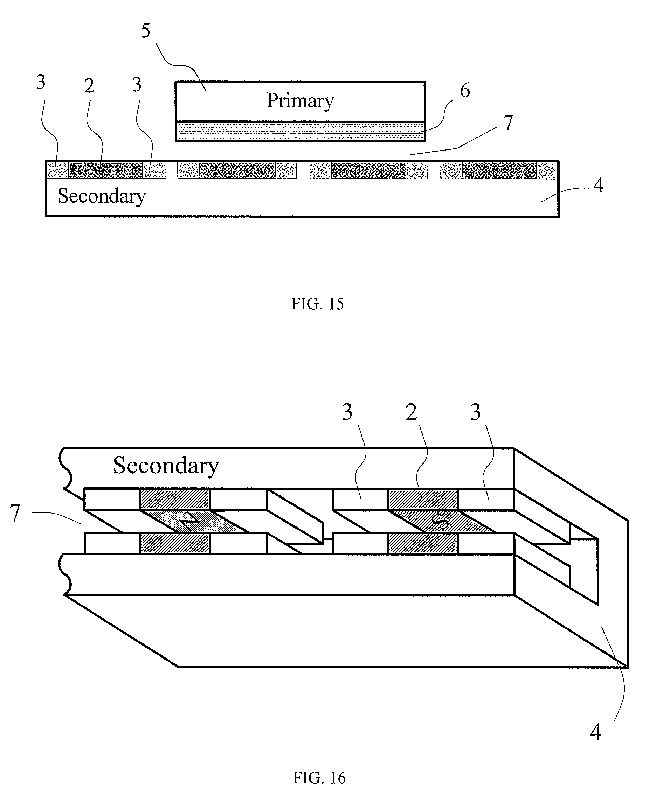

FIG. 15 shows a similar machine with inset magnets where the MPMPs are installed in the secondary back iron 4 such that a uniform air gap 7 is provided.

A double sided secondary for linear PM machines, incorporating the MPMPs, is depicted in FIG. 16 where the back iron 4 has a C-shaped cross-section and the MPMPs, which each consist of one center permanent magnet 2 and two outer permanent magnets 3, are mounted on the two opposing inner surfaces of the C-shaped back iron 4, with a uniform air gap 7 formed therebetween.

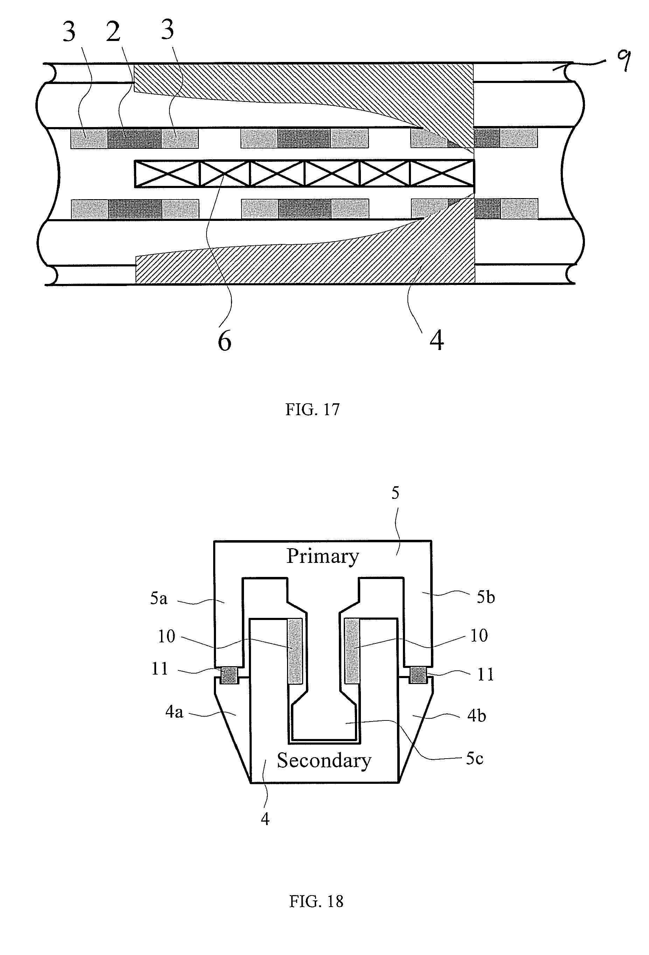

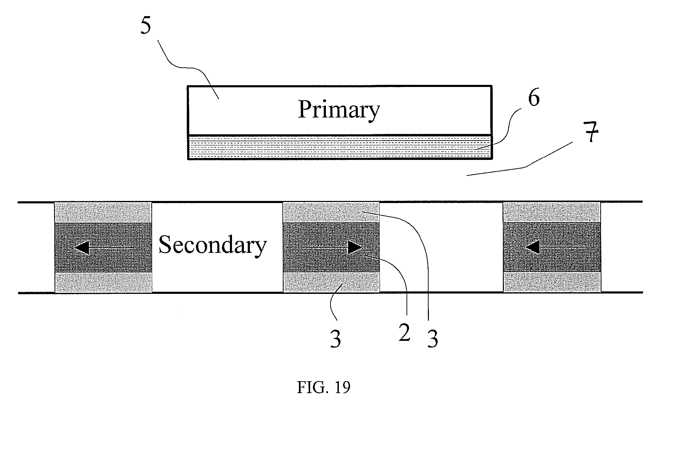

A double sided air-cored linear PMS machine with the secondary of FIG. 16 is shown in FIG. 17. Another double sided air-cored linear PM machine with the MPMPs for a positioning system is presented in FIG. 18. A linear IPM motor with the MPMPs is presented in FIG. 19. This machine consists of a moving primary 5, a fixed secondary having MPMPs of alternate polarization, each consisting of a center permanent magnet 2 and two outer permanent magnets 3, which extend in axial direction of the motor, wherein a uniform air gap is formed between the primary 5 and the secondary. The primary includes an iron core 5 and three phase winding 6. The secondary consists of MPMPs installed in the iron core. The MPMPs are magnetized in a direction parallel to the direction of motion of the primary 5. The magnetization of each MPMP is in direction opposite to the magnetization direction of the adjacent MPMP.

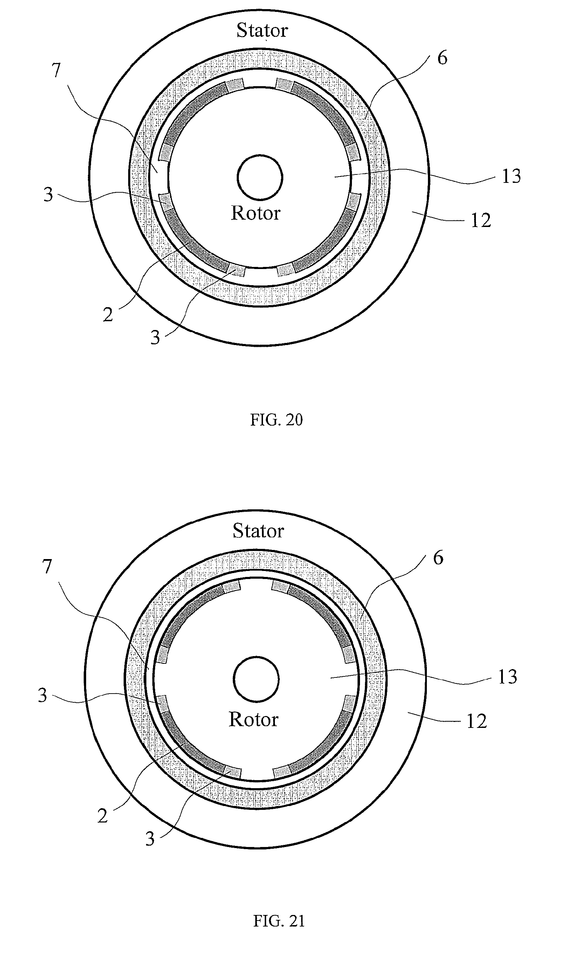

MPMPs can also be used in rotary PM machines. Four configurations are presented here as examples. FIG. 20 shows a rotary surfaced mounted PMS machine consisting of a stator 12, a rotor 13 and an air gap 7 therebetween. The stator 12 includes an iron core and a three-phase winding 6. The rotor 13 consists of an iron core and the MPMPs mounted on the surface of the core at equiangular intervals, each consisting of a center permanent magnet 2 and two outer permanent magnets 3, wherein the permanent magnets 2, 3 are each curved in accordance with the curvature of the corresponding outer circumferential surface of the rotor 13. Each MPMP is magnetized in a direction opposite the magnetization of an adjacent MPMP. The machine has a non uniform air gap 7.

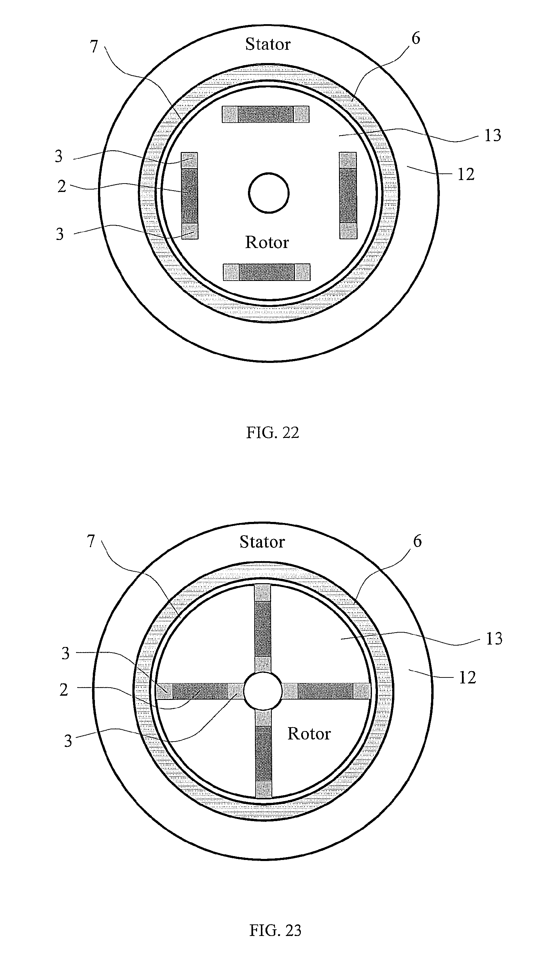

FIG. 21 shows a rotary inset PMS motor in which the MPMPs are installed in the rotor core such that a uniform air gap is provided. A rotary IPM machine comprising MPMPs according to the present invention is shown in FIG. 22. The MPMPs are buried inside the rotor core 13. FIG. 23 depicts a radial flux concentrated PMS motor with the MPMPs according to the present invention.

As will become apparent to a person skilled in the art, the machines presented above can be used as a motor or a generator. Also different type of PM machines incorporating the MPMPs can be built. Also the MPMPs according to the present invention can be used in actuators providing thrust and translational motion.

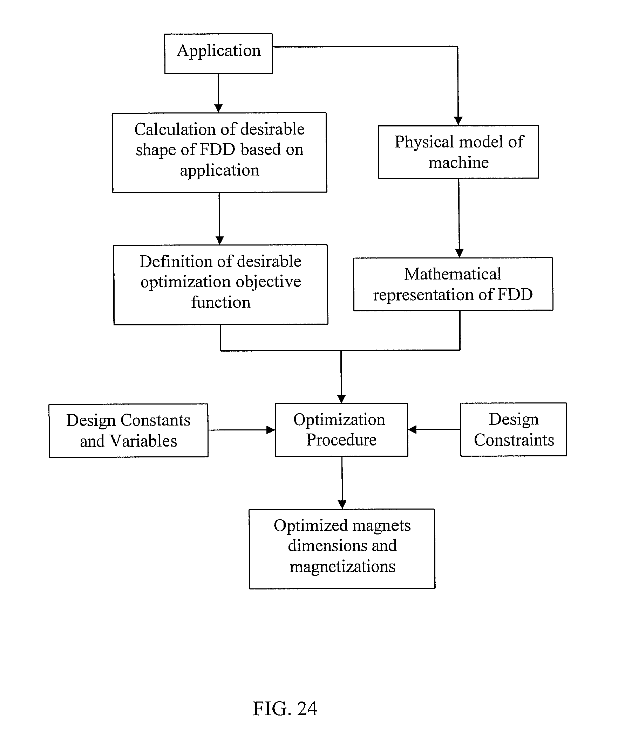

Fig. 24 shows a schematic flowchart of a method according to the present invention to design an MPMP generating a suitable magnetic flux density distribution (FDD). Having the desired FDD for a MPMP, the height of the MPMP and the magnetization of PM materials used in the PM modules, which are decided according to the motor performance requirement and the available permanent magnets, and the widths of the PM modules are obtained. Alternatively, it is possible to obtain the magnetization of PM materials, if the dimensions of PM modules have already been decided based on manufacturing and economic constraints. It is also possible to come up with a compromise between the dimensions and the magnetizations of PM modules, if there are freedom in choosing both the dimensions and the magnetizations. The procedure includes the definition of a desired shape of FDD for a PM machine which will result in an excellent performance especially a low torque or thrust ripple for a rotary or a linear machine. It is well known that this shape is a sinusoidal shape for a PM synchronous machine for instance. Then, the mathematical formula for the machine actual FDD is obtained in terms of the dimensions of the PM modules of the MPMP. An optimization is next performed to best fit the actual FDD to the desired FDD. The dimensions and/or magnetizations of PM modules forming the MPMP are chosen as the optimization variables. Suitable constraints can be defined for variables to ensure that the optimization results in practical dimensions and/or magnetizations for PM modules. Any well known optimization method can be used to solve this optimization problem. This optimization is carried out for a MPMP consisting of an odd numbered plurality of PM modules, e.g. of three PM modules, preferably under the constraint that the FDD of the MPMP shall be mirror symmetric about a mirror plane which is perpendicular to a base line of the MPMP.

### LIST OF REFERENCE NUMERALS

- 1: Modular permanent magnet pole
- 2: permanent magnet pole of high magnetization
- 3: permanent magnet pole of low magnetization
- 4: Secondary back iron
- 4a: left wing of secondary side
- 4b: right wing of secondary side
- 5: Primary side
- 5a: left yoke of primary side
- 5b: right yoke of primary side
- 5c: central protrusion of primary side
- 6: Winding of primary side
- 7: air gap

- 9: rail
- 10: magnet
- 11: wheel
- 12: stator
- 13: rotor

- 20: Conventional permanent magnet pole
- 21: Conventional permanent magnet pole of less height
- 22: Conventional modular permanent magnet pole

## Claims

1. A permanent magnet assembly for electric machines or actuators, comprising a plurality of permanent magnets (2, 3), each being of cubic or cuboidal shape, wherein:
said permanent magnets (2, 3) each have the same height and are disposed contiguous with each other along a given straight or curved line (x) such that said permanent magnet assembly (1) has at least one smooth surface spanned by axes including said given line (x);
the number of permanent magnets (2, 3) is given by 2n + 1 with n being an integer larger than or equal to one; and
said permanent magnets are shaped and disposed such that a magnetic field distribution of said permanent magnet assembly is mirror symmetric about a mirror plane which is perpendicular to said given line (x).

2. The permanent magnet assembly according to claim 1, wherein all permanent magnets have a magnetization of the same polarity.

3. The permanent magnet assembly according to claim 1 or 2, wherein n is equal to one and the two outside permanent magnets have the same width along said given line (x).

4. The permanent magnet assembly according to claim 3, wherein the two outside permanent magnets (3) are made of a lower quality permanent magnet material with a weaker magnetization and the middle permanent magnet (2) is made of a higher quality permanent magnet material with a stronger magnetization.

5. The permanent magnet assembly according to any of the preceding claims, wherein the line (x) is curved so that said permanent magnet assembly (1) has a curved surface profile, which is mirror symmetric about a mirror plane which is perpendicular to said given line (x).

6. An electric machine or actuator each comprising a plurality of permanent magnet assemblies as claimed in any of the preceding claims.

7. The electric machine or actuator according to claim 6, wherein said permanent magnet poles (1) are mounted on the back iron of a secondary (4) and configured and disposed as to produce a near sinusoidal magnetic field distribution to thereby form a linear permanent magnet synchronous motor.

8. The electric machine or actuator according to claim 6, wherein said permanent magnet poles (1) are buried in an iron core of a secondary (4) and configured and disposed as to produce a near sinusoidal magnetic field distribution to thereby form a linear interior permanent magnet machine.

9. The electric machine or actuator according to claim 6, wherein said permanent magnet poles (1) are mounted on an iron core of a secondary (4) and configured and disposed as to produce a near trapezoidal magnetic field distribution to thereby form a linear brushless machine.

10. The electric machine or actuator according to claim 6, wherein said permanent magnet poles (1) are mounted on an iron core of a rotor (13) and configured and disposed as to produce a near sinusoidal magnetic field distribution to thereby form a rotary permanent magnet synchronous motor.

11. The electric machine or actuator according to claim 6, wherein said permanent magnet poles (1) are buried in an iron core of a rotor (13) and configured and disposed as to produce a near sinusoidal magnetic field distribution to thereby form a rotary interior permanent magnet machine.

12. The electric machine or actuator according to claim 6, wherein said permanent magnet poles (1) are mounted on an iron core of a rotor (13) and configured and disposed as to produce a near trapezoidal magnetic field distribution to thereby form a rotary brushless machine.

13. A method for determining the dimensions and/or magnetizations of permanent magnets (2, 3) of a permanent magnet assembly (1) as claimed in any of claims 1 to 5, comprising the steps of:
defining a desirable flux density distribution for the permanent magnet assembly,
obtaining the actual flux density of the permanent magnet assembly in terms of dimensions and/or magnetizations of the permanent magnets forming said permanent magnet assembly, such that each permanent magnet (2, 3) has the same height and all permanent magnets (2, 3) forming said assembly are disposed contiguous with each other along a given straight or curved line and such that said permanent magnet assembly has at least one smooth surface spanned by axes including said given line, wherein the number of permanent magnets is given by 2n + 1 with n being an integer larger than or equal to one and said permanent magnets are shaped and disposed such that said flux density distribution is mirror symmetric about a mirror plane which is perpendicular to said given line; and
applying an optimization method to best fit the actual flux density distribution to the desired one.
